# EUROPEAN PATENT APPLICATION

(11) **EP 3 150 843 A1**
(43) Date of publication of application: **05.04.2017**
(21) Application number: 16191418.9
(22) Date of filing: 29.09.2016
(51) Int. Cl.: F02N 11/08

(54) **AUTOMOBILE ENGINE STARTER POWER SUPPLY BOX STRUCTURE**

(30) Priority: 02.10.2015 TH 1501006114
(71) Applicant: Boonyong, Cameron, 11000 Nonthaburi (TH)
(72) Inventor: Boonyong, Cameron, 11000 Nonthaburi (TH)
(74) Representative: Dr. Langfinger & Partner

(57) **Abstract**

The automobile engine starter power supply box structure, which was designed in the right height and width for installation in place of the current automobile or motorcycle battery has the following special features one of the positions of the automobile engine starter power supply box structure (4) has at least one space for the placement of rechargeable batteries (5) in which removable rechargeable batteries can be placed, at a space of the automobile engine starter power supply box structure (4) is a cap functioning (7) to close and push the rechargeable batteries for firm mounting with the system.

## Description

### Branch of Science Associated with the Invention

Technology involved with automobile engine starter power supply box structure.

### Background of Relevant Arts or Science

Refer to mine Petty Patent Application No. 1203001245, which revealed that the automobile engine starter power supply equipment is composed of the following:
- At least one 5-10-amp rechargeable battery functioning to transfer power to the super capacitor.
- At least one super capacitor functioning to store electricity as an energy source for starting automobile engines.
- At least one balancer composed of a diode and an LED light bulb. The diode functions to send electricity to every super capacitor and the LED light bulb functions to show whether or not every super capacitor has a full, steady, equal flow of electricity.

The rechargeable batteries are connected to the super capacitor whereby multiple super capacitors are mounted in a series or mounted in parallel as a single power supply set.

Each super capacitor is connected to a balancer which performs the function of transmitting electrical currents to every super capacitor and shows whether or not each super capacitor mounted in a series as a single power supply set is fully and equally loaded. The multiple super capacitors can rapidly release energy together within a short period of time in order to start the automobile engine.

The aforementioned automobile engine starter power supply equipment can start every type of automobile engine without limitations to certain types of automobiles and motorcycles, According to the prior invention is not have the designed automobile engine starter power supply box structure to support the removable rechargeable batteries and installation in place of current automobile or motorcycle batteries

Thus, this invention has the structure of the box for the present invention has been designed to encase automobile engine starter power supply equipment. Thus, it is the right height and width for installation in place of current automobile or motorcycle batteries.

The special features are as follows:
The rechargeable batteries are composed of the following:
   - Rechargeable batteries composed of at least one of the following: either double-A (AA) or triple-A (AAA) alkaline batteries, or 1 8 6 5 0 A,or C size, D size batteries.
   - Rechargeable batteries composed of at least one of the following: either double-A (AA) or triple-A (AAA) alkaline batteries, or 1 8 6 5 0 A, or C size, D size batteries in a mounted series or parallel series to serve as a single power supply set.
   - Rechargeable batteries that are lithium iron, or lithium phosphate, or nickel metal hydride, or lead-acid batteries.

One of the positions of the automobile engine starter power supply box structure has at least one space for the placement of rechargeable batteries in which removable rechargeable batteries can be placed, because rechargeable batteries have a limited usage life that differs from super capacitors and balancers with a long usage life and ability to start engines more than a hundred thousand times.

At a space of the automobile engine starter power supply box structure is a cap functioning to close and push the rechargeable batteries, for firm mounting with the system. A part of the aforementioned are positive and negative battery terminals connected to the system in order to handle the mounting of the automobile or motorcycle starter system to start in the same way as current batteries.

### Invention Characteristics and Aims

The structure of the automobile engine starter power supply equipment box, which was designed in the right height and width for installation in place of the current automobile or motorcycle battery has the following special features:
The rechargeable batteries are composed of the following:
   - Rechargeable batteries composed of at least one of the following: either double-A (AA) or triple-A (AAA) alkaline batteries, or 18650A,or C size, D size batteries.
   - Rechargeable batteries composed of at least one of the following: either double-A (AA) or triple-A (AAA) alkaline batteries, or 18650A,or C size, D size batteries in a mounted series or parallel series to serve as a single power supply set.
   - Rechargeable batteries that are lithium iron, or lithium phosphate, or nickel metal hydride, or lead-acid batteries.

One of the positions of the automobile engine starter power supply box structure has at least one space for the placement of rechargeable batteries in which removable rechargeable batteries can be placed, because rechargeable batteries have a limited usage life that differs from super capacitors and balancers with a long usage life and ability to start engines more than a hundred thousand times.

At a space of the automobile engine starter power supply box structure is a cap functioning to close and push the rechargeable batteries, for firm mounting with the system. A part of the aforementioned are positive and negative battery terminals connected to the system in order to handle the mounting of the automobile or motorcycle starter system to start in the same way as current batteries.

This invention is aimed at enabling the use of an automobile engine starter power supply box structure using rechargeable batteries with less power and size than previous lead-acid batteries and much less toxicity for the environment when compared to previous lead-acid batteries. The invention has a long usage life with the ability to start an engine more than a hundred thousand times. It is also lighter weight than lead-acid batteries by one of the positions of the automobile engine starter power supply box structure has at least one space for the placement of rechargeable batteries in which removable rechargeable batteries can be placed.

### Full Disclosure of the Invention

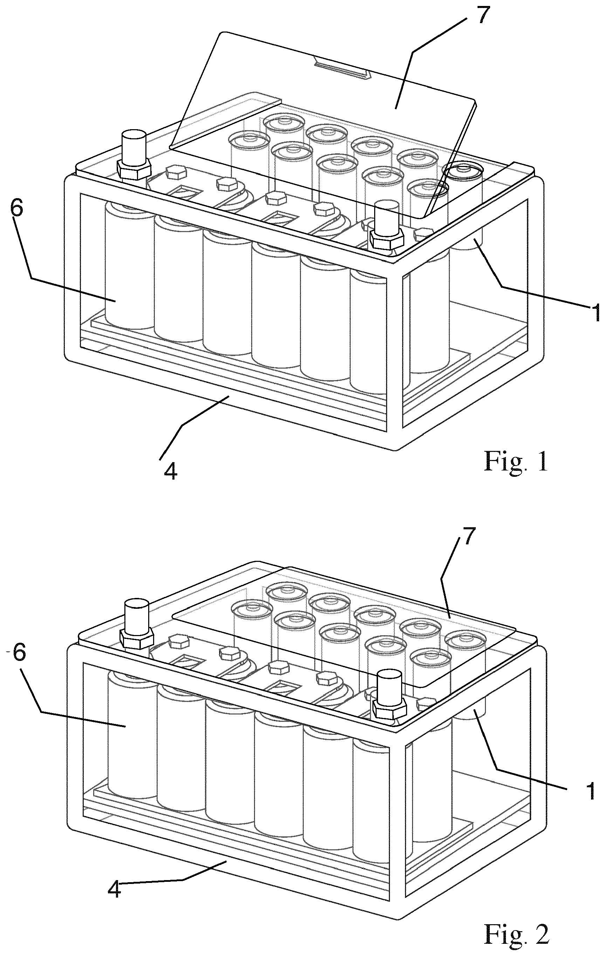

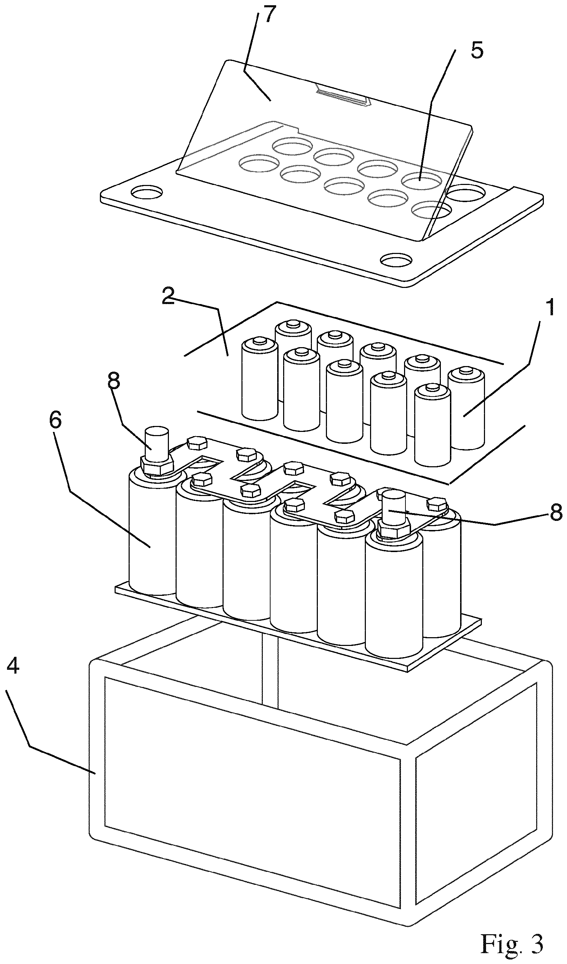

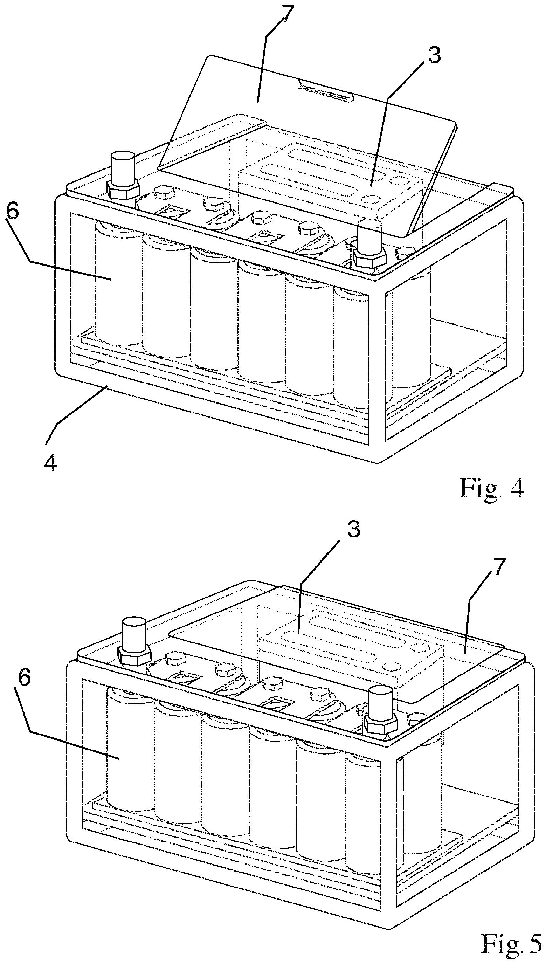

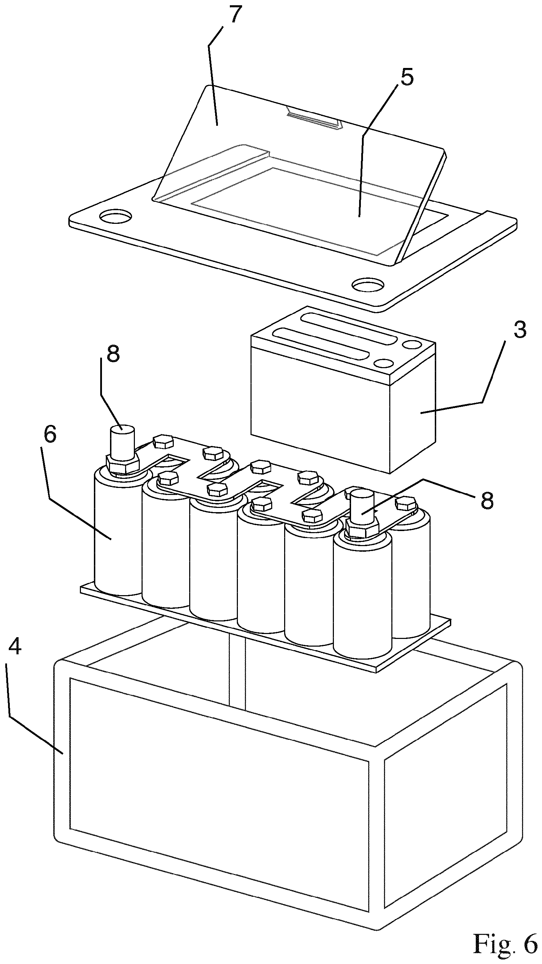

**Figure 1-6** shows the drawing of the automobile engine starter power supply box structure (4), which was designed in the right height and width for installation in place of the current automobile or motorcycle battery has the following special features:
   The rechargeable batteries are composed of the following:
**Figure 1-3** shows Rechargeable batteries (1) composed of at least one of the following: either double-A (AA) or triple-A (AAA) alkaline batteries, or 18650A,or C size, D size batteries in the automobile engine starter power supply box (4)
**Figure 1-3** shows Rechargeable batteries (2) composed of at least one of the following: either double-A (AA) or triple-A (AAA) alkaline batteries, or 18650A,or C size, D size batteries in a mounted series or parallel series to serve as a single power supply set in the automobile engine starter power supply box (4)
**Figure 4-6** shows Rechargeable batteries (3) that are lithium iron, or lithium phosphate, or nickel metal hydride, or lead-acid batteries in the automobile engine starter power supply box (4)

One of the positions of the automobile engine starter power supply box structure (4) has at least one space for the placement of rechargeable batteries (5) in which removable rechargeable batteries can be placed, because rechargeable batteries have a limited usage life that differs from super capacitors ( 6 ) and balancers with a long usage life and ability to start engines more than a hundred thousand times.

At a space of the automobile engine starter power supply box structure (4) is a cap functioning (7) to close and push the rechargeable batteries, for firm mounting with the system. A part of the Automobile engine starter power supply box structure (4) are positive and negative battery terminals (8) connected to the system in order to handle the mounting of the automobile or motorcycle starter system to start in the same way as current batteries.

### Brief Description of Drawings

**Figure 1-6** shows the drawing of the automobile engine starter power supply box structure (4) in this invention.

### Best Invention Method

As previously stated in the full disclosure of the invention.

## Claims

1. The automobile engine starter power supply box structure, which was designed in the right height and width for installation in place of the current automobile or motorcycle battery has the following special features:
One of the positions of the automobile engine starter power supply box structure (4) has at least one space for the placement of rechargeable batteries (5) in which removable rechargeable batteries can be placed
At a space of the automobile engine starter power supply box structure (4) is a cap functioning (7) to close and push the rechargeable batteries, for firm mounting with the system.

2. Automobile engine starter power supply box structure in accordance with **claim 1**
Rechargeable batteries (1) composed of at least one of the following: either double-A (AA) or triple-A (AAA) alkaline batteries, or 18650A,or C size, D size batteries.

3. Automobile engine starter power supply box structure **in accordance with claim 1**
Rechargeable batteries (2) composed of at least one of the following: either double-A (AA) or triple-A (AAA) alkaline batteries, or 18650A,or C size, D size batteries in a mounted series or parallel series to serve as a single power supply set.

4. Automobile engine starter power supply box structure **in accordance with claim 1**
Rechargeable batteries (3) that are lithium iron, or lithium phosphate, or nickel metal hydride, or lead-acid batteries.
